# EUROPÄISCHE PATENTSCHRIFT

(11) **EP 1 903 744 B1**
(45) Veröffentlichungstag und Bekanntmachung des Hinweises auf die Patenterteilung: **22.04.2015**
(21) Anmeldenummer: 07016894.3
(22) Anmeldetag: 29.08.2007
(51) Int. Cl.: H04L 29/06, H04L 12/22, G06F 21/00

(54) **Verfahren und Vorrichtungen zur Übermittlung von authentifizierbaren Inhalten von einem Anbieterserver an ein mobiles Endgerät**
Method and devices for transmitting authenticatable content from a provider server to a mobile terminal
Procédé et dispositifs de transmission de contenus authentifiables d'un serveur de fournisseur vers un terminal mobile

(30) Priorität: 20.09.2006 DE 102006044750
(43) Veröffentlichungstag der Anmeldung: 26.03.2008
(73) Patentinhaber: Vodafone Holding GmbH, 40213 Düsseldorf (DE)
(72) Erfinder: Palau, Jofre, 40223 Düsseldorf (DE)
(74) Vertreter: Jostarndt, Hans-Dieter

(56) Entgegenhaltungen:
- WO-A2-2005/006703
- "3rd Generation Partnership Project; Technical Specification Group Terminals; Mobile Execution Environment (MExE); Functional description; Stage 2 (Release 6)", 3GPP STANDARD; 3GPP TS 23.057, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Nr. V6.2.0, 1. September 2003 (2003-09-01) , Seiten 1-89, XP050362247,

## Beschreibung

### Technisches Gebiet

Die Erfindung betrifft ein Verfahren zum Übermitteln von Inhalten von einem Anbieterserver zu einem Endgerät. Die Erfindung betrifft ferner ein mobiles Endgerät sowie einen Anbieterserver, die zur Durchführung des Verfahrens ausgebildet sind.

### Hintergrund und Stand der Technik

Es ist bekannt, die Funktionalität von mobilen Endgeräten, wie insbesondere Mobiltelefonen, dadurch zu erweitern, dass von einem Anbieterserver bereitgestellte Inhalte, insbesondere Applikationen, in das mobile Endgerät geladen werden. Dies erfolgt mittels einer Plattform, die für Mobilfunknetze der dritten Generation beispielsweise in der Spezifikation TS 23.057 (Version 6.2.0, September 2003) des 3rd Generation Partnership Project (3GPP) beschrieben wird.

Der Ladevorgang erfolgt insbesondere anhand einer Kommunikation zwischen dem mobilen Endgerät und dem Anbieterserver, die beispielsweise auf dem Hypertext Transfer Protocol (HTTP) basiert. Im Rahmen dieser Kommunikation sendet das Mobiltelefon in der Regel eine Anforderung (HTTP-Request) der gewünschten Applikation an den Anbieterserver, die üblicherweise auch Informationen über eine Konfiguration des Mobiltelefons sowie die von ihm unterstützten Formate von Inhalten angeben. Diese Informationen sind üblicherweise Bestandteil der Kopfdaten der Anforderung (Request-Header). Aufgrund der Anforderung wählt der Anbieterserver dann entsprechend der in den Kopfdaten enthaltenen Informationen die Inhalte, die an das Mobiltelefon zu übermitteln sind.

Im Hinblick auf eine Authentifizierung in einem Server offenbart die WO 2005/006703 A2 ein System und ein Verfahren zum Authentifizieren von Clients. Bei dem Verfahren werden von einem Client Authentifizierungsinformationen an den Server gesendet, welche ein digitales Client-Zertifikat sowie eine digitale Signatur umfassen. Die digitale Signatur wird mittels eines in dem Client-Zertifikat enthaltenen öffentlichen Schlüssels von dem Server geprüft. Nach erfolgreicher Prüfung erhält der Client Zugriff auf Daten des Servers.

Die Applikationen nutzen üblicherweise Schnittstellen der bestehenden Software des mobilen Endgeräts, um auf bestehende Funktionen des mobilen Endgeräts öder in dem mobilen Endgerät gespeicherte Daten zuzugreifen. Um missbräuchliche Zugriffe auf sensible Daten und Funktionen, wie beispielsweise die Möglichkeit zum Aufbau einer Internetverbindung oder die Durchführung von Zahlungstransaktionen, zu verhindern, werden nur solchen Applikationen Zugriffsrechte auf diese Schnittstellen gewährt, die als vertrauenswürdig eingestuft werden bzw. von einem als vertrauenswürdig eingestuften Anbieterserver übermittelt worden sind. Die von einem Anbieterserver an das mobile Endgerät übermittelten Inhalte werden daher anhand eines kryptografischen Verfahrens authentifiziert.

Hierzu werden die Inhalte von dem Anbieterserver mit einer digitalen Signatur verstehen, die mittels eines privaten Verschlüsselungsschlüssels des Anbieterservers erzeugt wird. Die Signatur besteht dabei aus einer mit dem privaten Verschlüsselungsschlüssel verschlüsselten Prüfsumme der Inhalte. Innerhalb des mobilen Endgeräts wird die Signatur anhand eines dem Verschlüsselungsschlüssel zugeordneten digitalen Zertifikats verglichen. Hierzu wird die in den empfangenen Inhalten enthaltene Prüfsumme mittels eines in dem digitalen Zertifikat enthaltenen Prüfschlüssels entschlüsselt und mit einer Prüfsumme verglichen, die innerhalb des mobilen Endgeräts erzeugt worden ist. Typischerweise han-delt es sich bei dem Verschlüsselungsschlüssel und dem Prüfschlüssel um ein asymmetrisches Schlüsselpaar, bei dem der Prüfschlüssel dem öffentlichen Schlüssel des Anbieterservers entspricht. Bei dem digitalen Zertifikat handelt es sich entweder um ein von einer Zertifizierungsstelle ausgegebenes Wurzelzertifikat oder um ein mittels des Wurzelzertifikats authentifizierbares Zwischenzertifikat bzw. um ein von dem Anbieter der Inhalte ausgegebenes Anbieterzertifikat, das mittels eines Wurzelzertifikats oder eines Zwischenzertifikats authentifizierbar ist. Üblicherweise verfügt ein mobiles Endgerät über mehrere Wurzel- und Zwischenzertifikate, um Inhalte von unterschiedlichen Anbieterservern laden zu können, wobei die Wurzelzertifikate entweder von dem Hersteller vor der Auslieferung in dem mobilen Endgerät gespeichert werden oder von einem Mobilfunkanbieter auf einer SIM- oder USIM-Karte des mobilen Endgeräts hinterlegt werden, bevor diese an den Nutzer ausgegeben wird.

Insbesondere im Hinblick auf die stetig wachsende Zahl von Applikationen für mobile Endgeräte und deren Anbietern besteht bei der bekannten Plattform das Problem, dass im Bereich des Anbieterservers keinerlei Informationen über die innerhalb des mobilen Endgeräts verfügbaren Wurzel- und Zwischenzertifikate zur Verfügung stehen. Hierdurch kann das Verhalten des Anbieterservers nicht an die verfügbaren Zertifikate angepasst werden, und es werden oftmals Inhalte von einem Anbieterserver an ein mobiles Endgerät übermittelt, die mit einer Signatur versehen sind, welche aufgrund eines fehlenden Zertifikats nicht geprüft und damit nicht genutzt werden können. Die fehlenden Zertifikate muss der Nutzer in einem solchen Fall in aufwendiger und umständlicher Weise selbsttätig beschaffen.

### Darstellung der Erfindung

Es ist daher eine Aufgabe der vorliegenden Erfindung, das Verhalten eines Anbieterservers bei der Übermittlung von Inhalten an ein mobiles Endgerät an die innerhalb des mobilen Endgerätes gespeicherten digitalen Zertifikate anpassen zu können.

Erfindungsgemäß wird diese Aufgabe durch ein Verfahren mit den Merkmalen des Patentanspruchs 1, durch ein mobiles Endgerät nach Anspruch 14 sowie durch einen Anbieterserver nach Anspruch 15 gelöst. Erfindungsgemäß wird die Aufgabe auch durch ein durch ein Computerprogrammprodukt nach Anspruch 13 gelöst.

Demgemäß wird ein Verfahren der eingangs genannten Art bereitgestellt, bei dem die Inhalte einen Authentifizierungsbestandteil umfassen, der innerhalb des Anbieterservers mittels eines privaten Verschlüsselungsschlüssels verschlüsselt wird und mittels eines digitalen Zertifikats überprüfbar ist, um die übermittelten Inhalte zu authentifizieren. Das Verfahren zeichnet sich dadurch aus, dass in dem Anbieterserver eine in einem ersten Kommunikationsschritt von dem mobilen Endgerät gesendete Information über mehrere innerhalb des mobilen Endgeräts gespeicherte digitale Zertifikate empfangen wird. Die Information wird innerhalb des Anbieterservers ausgewertet, so dass der Anbieterserver Kenntnis über mehrere in dem mobilen Endgerät verfügbaren digitalen Zertifikate erlangt und die Inhalte werden in einem zweiten Kommunikationsschritt in Abhängigkeit von einem Ergebnis der Auswertung der erhaltenen Informationen an das mobile Endgerät übermittelt.

Darüber hinaus wird ein mobiles Endgerät zum Empfangen von Inhalten von einem Anbieterserver bereitgestellt. Die Inhalte umfassen einen Authentifizierungsbestandteil, der mittels eines privaten Verschlüsselungsschlüssels des Anbieterservers verschlüsselt ist. Innerhalb des mobilen Endgeräts ist der Authentifizierungsbestandteil mittels eines dem Verschlüsselungsschlüssel zugeordneten digitalen Zertifikats authentifizierbar. Das mobile Endgerät zeichnet sich dadurch aus, dass es dazu ausgebildet ist, in einem Kommunikationsschritt eine Information über mehrere innerhalb des Endgeräts gespeicherte digitale Zertifikate an den Anbieterserver zu übermitteln, so dass der Anbieterserver Kenntnis über mehrere in dem mobilen Endgerät verfügbaren digitalen Zertifikate erlangt.

Ferner wird ein Anbieterserver zum Übermitteln von Inhalten an ein mobiles Endgerät geschaffen. Die Inhalte umfassen einen Authentifizierungsbestandteil, der innerhalb des Anbieterservers mittels eines privaten Verschlüsselungsschlüssels verschlüsselbar und mittels eines digitalen Zertifikats überprüfbar ist. Der Anbieterserver ist dazu ausgebildet, eine in einem Kommunikationsschritt von dem mobilen Endgerät gesendete Information über mehrere innerhalb des mobilen Endgeräts gespeicherte zertifizierte Prüfschlüssel zu empfangen und auszuwerten, so dass der Anbieterserver Kenntnis über mehrere in dem mobilen Endgerät verfügbaren digitalen Zertifikate erlangt.

Der Begriff digitales Zertifikat umfasst im Rahmen der Erfindung insbesondere digitale Wurzelzertifikate, digitale Zwischenzertifikate und digitale Anbieterzertifikate. Wurzelzertifikate sind innerhalb des mobilen Endgeräts in einem Speicherbereich gespeichert, der vor einem Zugriff des Nutzers des mobilen Endgeräts gesichert ist. Zwischenzertifikate und Anbieterzertifikate enthalten einen Authentifizierungsbestandteil, der mittels des Wurzelzertifikats oder eines oder mehrerer weiterer Zwischenzertifikate geprüft werden kann. Wenigstens eines dieser weiteren Zwischenzertifikate ist dabei mittels eines Wurzelzertifikats authentifizierbar. Die digitalen Zertifikate sind jeweils einem Verschlüsselungsschlüssel zugeordnet und werden zur Prüfung von mit dem Verschlüsselungsschlüssel verschlüsselter Daten herangezogen. Insbesondere enthalten die digitalen Zertifikate jeweils einen dem Verschlüsselungsschlüssel zugeordneten Prüfschlüssel zur Entschlüsselung der Daten.

Der Begriff Authentifizierungsbestandteil ist ebenfalls in seiner weitesten Bedeutung zu verstehen und umfasst Daten in jeglicher Form, die mittels eines digitalen Zertifikats authentifizierbar sind. Insbesondere kann es sich bei dem Authentifizierungsbestandteil um eine digitale Signatur handeln, die mittels eines digitalen Zertifikats geprüft werden kann.

Die Erfindung hat insbesondere den Vorteil, dass der Anbieterserver aufgrund der von dem mobilen Endgerät übermittelbaren Information über die in dem mobilen gespeicherten digitalen Zertifikate Kenntnis über die in dem mobilen Endgerät verfügbaren digitalen Zertifikate erlangt. Entsprechend dieser Kenntnis kann das Verhalten des Anbieterservers angepasst werden.

In einer Ausführungsform des Verfahrens, des mobilen Endgeräts und des Anbieterservers ist es vorgesehen, dass in dem Anbieterserver eine im ersten Kommunikationsschritt von dem mobilen Endgerät gesendete Nachricht empfangen wird, welche die Informationen über die innerhalb des mobilen Endgeräts gespeicherten digitalen Zertifikate in einem Standardformat enthält.

Unter einem Standardformat wird insbesondere ein Format verstanden, das von einem Anbieterserver interpretiert werden kann, ohne dass Interpretationsregeln von dem mobilen Endgerät an den Anbieterserver übermittelt werden müssen. Die Interpretationsregeln werden vorzugsweise zuvor festgelegt und in dem mobilen Endgerät sowie in dem Anbieterserver hinterlegt. Sie können dabei Bestandteil eines Protokolls, das von einer Vielzahl von Anbieterservern und mobilen Endgeräten unterstützt wird.

Typischerweise basiert die Kommunikation zwischen dem mobilen Endgerät und dem Anbieterserver auf dem Hypertext Transfer Protocol (HTTP). Im Rahmen dieses Protokolls werden Nachrichten zwischen dem mobilen Endgerät und dem Anbieterserver ausgetauscht, die einen Nutzdatenbereich und einen Kopfdatenbereich enthalten. Der Kopfdatenbereich enthält dabei insbesondere standardisierte Angaben über die Konfiguration des mobilen Endgeräts. In dem Anbieterserver können anhand dieser Angaben Art und Form der zu übermittelnden Inhalte an das mobile Endgerät angepasst werden.

Eine Ausgestaltung des Verfahrens, des mobilen Endgeräts und des Anbieterservers sieht daher vor, dass der erste Kommunikationsschritt auf dem Hypertext Transfer Protocol basiert, wobei in dem ersten Kommunikationsschritt ein von dem mobilen Endgerät gesendeter HTTP-Request in dem Anbieterserver empfangen wird und wobei die Information über die innerhalb des mobilen Endgeräts gespeicherten zertifizierten Prüfschlüssel Bestandteil eines Kopfdatenbereichs des HTTP-Requests ist.

Vorteilhaft wird die Information über die in dem mobilen Endgerät enthaltenen Prüfschlüssel in dieser Ausgestaltung in den Kopfdatenbereich des HTTP-Requests eingebracht, mit dem das mobile Endgerät die Inhalte von dem Anbieterserver anfordert. Dies hat sich insbesondere deswegen als bevorzugt herausgestellt, weil der Kopfdatenbereich weitere Informationen über die Konfiguration und bevorzugten Inhalte des mobilen Endgeräts enthält, die in dem Anbieterserver ausgewertet und zur Anpassung der zu übermittelnden Inhalte herangezogen werden. Als HTTP-Request wird hier die Nachricht bezeichnet, mit der Inhalte von dem Anbieterserver angefordert werden.

Eine weitere Ausgestaltung des Verfahrens, des mobilen Endgeräts und des Anbieterservers beinhaltet, dass aufgrund der Auswertung der Information über die innerhalb des mobilen Endgeräts gespeicherten digitalen Zertifikate innerhalb des Anbieterservers ermittelt wird, für welche der in dem Anbieterserver verfügbaren Verschlüsselungsschlüssel in dem mobilen Endgerät ein zugeordnetes Zertifikat gespeichert ist.

Eine Ausführungsform des Verfahrens, des mobilen Endgeräts und des Anbieterservers ist dadurch gekennzeichnet, dass in dem Anbieterserver ein Verschlüsselungsschlüssel ausgewählt wird, für den in dem mobilen Endgerät ein zugeordnetes digitales Zertifikat gespeichert ist, und dass der Authentifizierungsbestandteil der Inhalte mit dem ausgewählten Verschlüsselungsschlüssel verschlüsselt wird.

Vorteilhaft ist hierdurch gewährleistet, dass die an das mobile Endgerät übermittelten Inhalte bzw. deren Authentifizierungsbestandteil in dem mobilen Endgerät mittels eines digitalen Zertifikats geprüft werden können. Ferner wird eine unnötige Übermittlung bereits in dem mobilen Endgerät vorhandener digitaler Zertifikate vermieden.

Eine Weiterbildung des Verfahrens, des mobilen Endgeräts und des Anbieterservers beinhaltet, dass der Authentifizierungsbestandteil der Inhalte in dem Anbieterserver mittels eines Verschlüsselungsschlüssels verschlüsselt wird, dem ein digitales Anbieterzertifikat zugeordnet ist, wobei das digitale Anbieterzertifikat von dem Anbieterserver an das mobile Endgerät übermittelt wird.

Vorteilhaft werden Inhalte bei dieser Weiterbildung durch ein dem Anbieterserver bzw. dem den Server betreibenden Anbieter zugeordnet Zertifikat geprüft.

Eine Ausführungsform des Verfahrens, des mobilen Endgeräts und des Anbieterservers sieht vor, dass das digitale Anbieterzertifikat mittels eines in dem mobilen Endgerät gespeicherten digitalen Zertifikats authentifizierbar ist.

Vorteilhaft wird das Anbieterzertifikat bei dieser Ausführungsform seinerseits durch ein in dem mobilen Endgerät gespeichertes Zertifikat geprüft.

Möglicherweise kann jedoch der Fall eintreten, dass ein unmittelbar zur Prüfung des Anbieterzertifikats erforderliches digitales Zertifikat nicht in dem mobilen Endgerät enthalten ist.

In einer Weiterbildung des Verfahrens, des mobilen Endgeräts und des Anbieterservers ist es daher vorgesehen, dass von dem Anbieterserver ein digitales Zwischenzertifikat an das mobile Endgerät übermittelt wird, wobei das digitale Zwischenzertifikat zur Prüfung des Anbieterzertifikats herangezogen werden kann, und wobei das digitale Zwischenzertifikat mittels eines in dem mobilen Endgerät gespeicherten digitalen Zertifikats geprüft werden kann.

Hierdurch können dem mobilen Endgerät die fehlenden Zwischenzertifikate bereitgestellt werden, die in einer von dem Anbieterzertifikat genutzten Zertifikatskette benötigt werden. Unter einer Zertifikatskette wird dabei eine Menge von digitalen Zertifikaten verstanden, die zumindest ein Wurzelzertifikat umfasst sowie ein Anbieterzertifikat, das mittels des Wurzelzertifikats authentifizierbar ist. Im Allgemeinen enthält eine Zertifikatskette zudem wenigstens ein Zwischenzertifikat, das zur Authentifizierung des Anbieterzertifikats herangezogen wird, und seinerseits mittels des Wurzelzertifikats authentifizierbar ist.

Eine Ausgestaltung des Verfahrens, des mobilen Endgeräts und des Anbieterservers sieht vor, dass es sich bei wenigstens einem in dem mobilen Endgerät gespeicherten digitalen Zertifikat um ein digitales Wurzelzertifikat handelt.

Ferner ist eine Ausgestaltung des Verfahrens, des mobilen Endgeräts und des Anbieterservers dadurch gekennzeichnet, dass das digitale Wurzelzertifikat in einem Teilnehmeridentifikationsmodul gespeichert ist, das in dem mobilen Endgerät enthalten ist.

Das Teilnehmeridentifikationsmodul wird üblicherweise von dem Betreiber eines Telekommunikationsnetzes ausgegeben, in dem das mobile Endgerät betrieben wird. Der Betreiber des Telekommunikationsnetzes tritt oftmals auch als Anbieter von Inhalten wie insbesondere von Softwareapplikationen zur Erweiterung der Funktionalität des mobilen Endgeräts auf. Bei der zuvor dargestellten Ausgestaltung der Erfindung hat der Betreiber vorteilhaft die Möglichkeit, die zur Prüfung der von ihm bereitgestellten Inhalte notwendigen Wurzelzertifikate in das Teilnehmeridentifikationsmodul einzubringen und damit sicherzustellen, dass diese in dem mobilen Endgerät verfügbar sind.

Eine Ausführungsform des Verfahrens, des mobilen Endgeräts und des Anbieterservers sieht weiterhin vor, dass das mobile Endgerät wenigstens ein weiters digitales Zertifikat enthält, bei dem es sich um ein Zwischenzertifikat handelt, das mittels des Wurzelzertifikats authentifizierbar ist.

Eine Ausführungsform des Verfahrens, des mobilen Endgeräts und des Anbieterservers beinhaltet zudem, dass die Inhalte einen Programmcode enthalten, der innerhalb des mobilen Endgeräts ausführbar ist, nachdem die übermittelten Inhalte innerhalb des mobilen Endgeräts authentifiziert worden sind.

Darüber hinaus wird ein Computerprogrammprodukt bereitgestellt, das ein Computerprogramm zur Ausführung eines Verfahrens der zuvor beschriebenen Art enthält.

Ferner wird ein Kommunikationssystem bereitgestellt, in dem wenigstens ein mobiles Endgerät mit wenigstens einem Anbieterserver verbindbar ist. Das Kommunikationssystem zeichnet sich dadurch aus, dass es wenigstens ein mobiles Endgerät der zuvor dargestellten Art sowie wenigstens einen Anbieterserver der zuvor genannten Art enthält.

Das mobile Endgerät ist in einer Ausführungsform dazu ausgebildet, Inhalte zu empfangen, die von dem Anbieterserver in Abhängigkeit von einem Ergebnis der Auswertung der Information an das mobile Endgerät übermittelt werden.

Vorzugsweise ist ferner der Anbieterserver dazu ausgebildet, Inhalte in einem Kommunikationsschritt in Abhängigkeit von einem Ergebnis der Auswertung der erhaltenen Informationen über in dem mobilen Endgerät gespeicherte digitale Zertifikate an das mobile Endgerät zu übermitteln.

Die genannten sowie weitere Vorteile, Besonderheiten und zweckmäßigen Ausgestaltungen der Erfindung werden auch anhand Ausführungsbeispiele deutlich und im Hinblick auf die Ausführungsbeispiele nachfolgend anhand der Figuren beschrieben.

### Kurze Beschreibung der Figuren

Von den Figuren zeigt:
- Fig. 1: eine schematische Darstellung eines mobilen Endgeräts, das über ein Netzwerk mit einem Anbieterserver verbunden ist, und
- Fig. 2: eine schematische Darstellung verschiedener Zertifikatskette mit einem Wurzelzertifikat.

### Darstellung von Ausführungsbeispielen

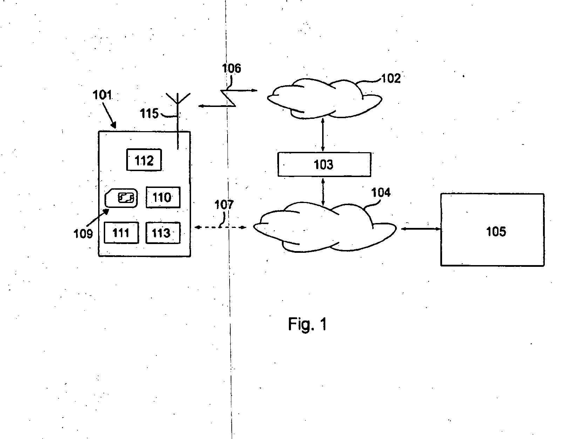

Figur 1 zeigt in schematischer Darstellung ein mobiles Endgerät 101, bei dem es sich beispielsweise um ein Mobiltelefon handeln kann. Das mobile Endgerät 101 ist über ein Netzwerk 102, 103, 104 mit einem Anbieterserver 105 verbunden. Das Netzwerk 102, 103, 104 umfasst ein Telekommunikationsnetz 102, mit dem das mobile Endgerät über eine Luftschnittstelle 106 verbunden ist und das beispielsweise als GSM-Netz (GSM: Global System for Mobile Communications)oder UMTS-Netz (UMTS: Universal Mobile Telecommunication System) ausgebildet ist. Das Telekommunikationsnetz 102 steht über einen Gateway 103 mit einem Datennetz 104 in Verbindung, bei dem es sich beispielsweise um das Internet oder ein Intranet handelt. An das Datennetz ist der Anbieterserver 105 angeschlossen. In einer alternativen Ausführungsform kann das mobile Endgerät 101 gleichfalls über eine weitere Schnittstelle mit einem Schnittstellenrechner verbunden sein, der seinerseits in Verbindung mit dem Datennetz bzw. einem Gateway steht. Diese alternative Verbindungsmöglichkeit ist in Figur 1 durch einen Pfeil 107 angedeutet. Die Schnittstelle kann dabei beispielsweise als Infrarot- oder Bluetoothschnittstelle ausgebildet oder durch eine Kabelverbindung realisiert sein. Im Allgemeinen sind eine Vielzahl von mobilen Endgeräten 101 sowie mehrere Anbieterserver 105 mit dem Datennetz 104 verbindbar.

Informationen zum Einbuchen in das Telekommunikationsnetz 102 sind in einem Teilnehmeridentifikationsmodul 109 gespeichert, das in der Regel von dem Betreiber des Telekommunikationsnetzes 102 bereitgestellt wird. Bei dem Teilnehmeridentifikationsmodul 109 handelt es sich um eine Chipkarte, die in Verbindung mit GSM-Netzen als SIM-Karte (SIM: Subscriber Identification Module) in Verbindung mit UMTS-Netzen als USIM-Karte (USIM: Universal Subscriber Identification Module) bezeichnet wird und in das mobile Endgerät 101 eingesteckt ist. Das mobile Endgerät 101 umfasst weiterhin eine Prozessoreinrichtung 110, die mit dem Teilnehmeridentifikationsmodul 109, einer Tastatur 111, einer Anzeigeeinrichtung 112 und einem Speicher 113 verbunden ist, der in der Regel einen flüchtigen sowie einen nichtflüchtigen Speicherbereich aufweist. Der Speicher 113 enthält ein Betriebssystem, das die Funktionen des mobilen Endgeräts 101 steuert und das insbesondere eine Programmausführungsumgebung umfasst, die es erlaubt, weitere Software auszuführen, die in dem Speicher 113 oder in dem Teilnehmeridentifikationsmodul 109 gespeichert ist. Bei der Programmausführungsumgebung kann es sich beispielsweise um die "Java 2 Platform, Micro Edition" (J2ME) der Firma Sun Microsystems handeln. Die mittels der Programmausführungsumgebung ausgeführte Software kann über Softwareschnittstellen, die üblicherweise als APIs (Application Programming Interfaces) bezeichnet werden, auf Funktionen des mobilen Endgeräts 101 und des Teilnehmeridentifikationsmoduls 109 zugreifen sowie auf Daten, die in dem Speicher 113 oder in dem Teilnehmeridentifikationsmodul 109 gespeichert sind. Darüber hinaus weist das mobile Endgerät 101 eine Funkantenne 115 auf, die den Aufbau einer Verbindung zu dem Telekommunikationsnetz 102 über die Luftschnittstelle 106 gestattet.

Der Anbieterserver 105 wird von einem Anbieter betrieben, der Inhalte bereitstellt, die über das Netzwerk 102, 103, 104 in das mobile Endgerät 101 geladen werden können. Die Inhalte umfassen insbesondere Programmcodes für Softwareapplikationen, die mittels der Programmausführungsumgebung innerhalb des mobilen Endgeräts 101 ausführbar sind, um die Funktionalität des mobilen Endgeräts 101 zu erweitern. Die Kommunikation zwischen dem mobilen Endgerät 101 und dem Anbieterserver 104 zur Übermittlung der Inhalte erfolgt auf der Grundlage eines dem Fachmann bekannten Kommunikationsprotokolls, vorzugsweise auf dem Hypertext Transfer Protocol (HTTP) oder einem von diesem abgeleiteten Protokoll. Derartige Protokolle sehen zur Übermittlung von Inhalten mehrere Kommunikationsschritte vor. In einem ersten Kommunikationsschritt werden die Art und die Form der zu übertragenden Inhalte zwischen dem mobilen Endgerät 101 und dem Anbieterserver 105 ausgehandelt. Dazu sendet das mobile Endgerät 101 zusammen mit der Anforderung der Inhalte Informationen über in dem mobilen Endgerät 101 zur Verfügung stehende Funktionalitäten sowie von dem mobilen Endgerät 101 interpretierbare bzw. von dem Nutzer des mobilen Endgeräts 101 bevorzugte Formate und Sprachen an den Anbieterserver 101. Die von dem Nutzer bevorzugten Formate und Sprachen sind dabei innerhalb eines Nutzerprofils in dem Speicher 113 oder in dem Teilnehmeridentifikationsmodul 109 gespeichert. Die von dem mobilen Endgerät 101 übermittelten Informationen können insbesondere Angaben über die Art und Version der vorhandenen Programmausführungsumgebung, die Art und Größe bzw. Auflösung der Anzeigeeinrichtung 112, die Art der Tastatur 111, eine Liste mit verfügbaren Audio-oder Videodekodierern, eine Liste mit unterstützten Zeichentabellen oder eine Liste bevorzugter Sprachen enthalten. Anhand der Informationen kann innerhalb des Anbieterservers 105 eine von mehreren verfügbaren Versionen der angeforderten Inhalte ermittelt werden, die möglichst gut an die erhaltenen Informationen angepasst ist oder es kann eine angepasste Version erzeugt werden. In einem nachfolgenden Kommunikationsschritt werden die angepassten Inhalte dann von dem Anbieterserver 105 an das mobile Endgerät 101 gesendet.

Bei Verwendung des HTTP erfolgt die Anforderung der Inhalte anhand eines HTTP-Requests, bei dem es sich um eine von dem mobilen Endgerät 101 an den Anbieterserver 105 gesendete Nachricht handelt, die einen Kopfdatenbereich (Request-Header) und einen Nutzdatenbereich umfasst. Der Nutzdatenbereich enthält insbesondere eine Angabe der spezifischen Inhalte, die angefordert werden. In dem Request-Header sind insbesondere Informationen über die Konfiguration des mobilen Endgeräts 101 enthalten, von denen einige zuvor beispielhaft genannt worden sind. Der dem Fachmann an sich bekannte Request-Header enthält in der Regel mehrere Headerfelder, die jeweils durch ein standardisiertes Schlüsselwort bezeichnet werden und die zugehörigen Informationen anhand ebenfalls standardisierter Bezeichnungen angeben. Beispielsweise hat der Request-Header bei einer oftmals durchgeführten Anforderung von Inhalten anhand einer GET-Methode die im Folgenden angegebene Form. Die Schlüsselworte der verschiedenen beispielhaft angegebenen Headerfelder sind dabei fett gedruckt, wobei die Heaederfelder dem Fachmann an sich geläufig sind und daher nicht weiter erläutert werden:
GET / HTTP/1.1
**Host:** www.vodafone.com
**User-Agent:** Mozilla/5.0 (Windows; U; Windows NT 5.1)
Gecko/20060508 Firefox/1.5.04
**Accept:** text/xml,application/xml,application/xhtml+xml,
text/html; q=0.9, text/plain; q=0.8, image/png, */*;
q=0.5
**Accept-Language:** en-gb, en; q=0.5
**Accept-encoding:** gzip, deflate
**Accept-Charset:** ISO-8859-1, utf-8; q=0.7,*,q=0.7
**Keep-Alive:** 300
**Proxy-Connection:** keep-alive

Um missbräuchliche Zugriffe auf sensible APIs und Daten des mobilen Endgeräts 101 zu verhindern, werden die von dem Anbieterserver 105 empfangenen Inhalte in dem mobilen Endgerät 101 zunächst authentifiziert. Erst nach erfolgreicher Authentifizierung wird den enthaltenen Softwareapplikationen ein Zugriff auf die APIs oder die Daten gewährt. Wenn die Inhalte nicht erfolgreich authentifiziert werden können, wird der Zugriff auf die betreffenden APIs oder Daten nicht gewährt. Dabei kann es insbesondere auch vorgesehen sein, dass die Inhalte aus dem Speicher 113 gelöscht werden, wenn die Authentifizierung fehlschlägt, oder die enthaltenden Softwareapplikationen nicht ausgeführt werden können. Die Authentifizierung erfolgt üblicherweise im Rahmen einer so genannten Publik-Key-Infrastruktur (PKI) anhand eines Authentifizierungsbestandteils der Inhalte, der mittels eines digitalen Zertifikats geprüft wird. Der Authentifizierungsbestandteil ist als digitale Signatur ausgebildet, die einen Hashwert der Inhalte oder eines Teils der Inhalte umfasst, der mittels eines privaten Verschlüsselungsschlüssels des Anbieters der Inhalte verschlüsselt ist. Dem privaten Verschlüsselungsschlüssel ist ein Prüfschlüssel zugeordnet, der zur Prüfung der digitalen Signatur herangezogen wird, und Bestandteil eines von einer Zertifizierungsstelle ausgegebenen digitalen Zertifikats des Anbieters ist. Das Anbieterzertifikat wird dabei mittels einer Zertifikatskette authentifiziert, die zusätzlich wenigstens ein Wurzelzertifikat und gegebenenfalls ein oder mehrere Zwischenzertifikate umfasst. Durch eine Authentifizierung des Anbieterzertifikats innerhalb des mobilen Endgeräts 101 wird sichergestellt, dass die Inhalte von einem als vertrauenswürdig eingestuften Anbieter bereitgestellt worden sind. Die nachfolgende Prüfung der digitalen Signatur der Inhalte erlaubt es festzustellen, ob die Inhalte in unveränderter Form in dem mobilen Endgerät 101 empfangen worden sind.

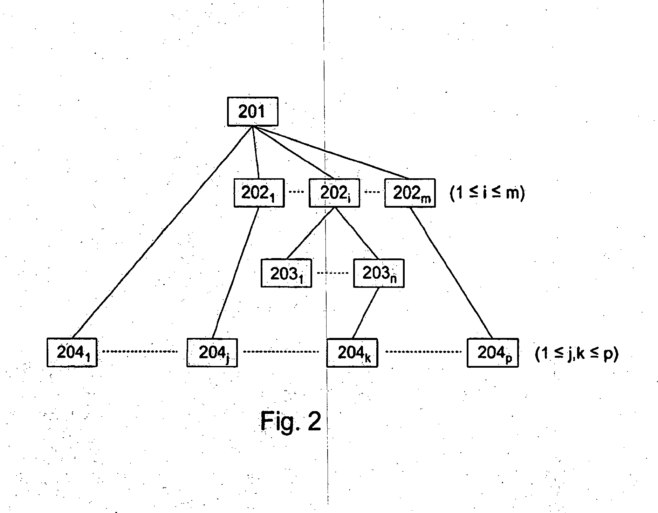

In Figur 2 ist beispielhaft mehrere Zertifikatsketten dargestellt, die auf einem gemeinsamen Wurzelzertifikat 201 basieren. Die oberste Hierarchieebene der Zertifikatsketten umfasst somit das Wurzelzertifikat 201, das im Rahmen eines abgesicherten Prozesses durch eine Zertifizierungsstelle in einen sicheren Bereich des mobilen Endgeräts 101 eingebracht wird und den Prüfschlüssel der Zertifizierungsstelle enthält. Die in den übrigen Hierarchieebenen dargestellten Zertifikate enthalten einen Prüfschlüssel sowie eine digitale Signatur, die mittels eines Prüfschlüssels geprüft werden kann, der in einem digitalen Zertifikat einer höheren Hierarchieebene enthalten ist. Mit Ausnahme des Wurzelzertifikats kann ein Zertifikat einer bestimmten Hierarchieebene somit mittels eines Zertifikats einer höheren Hierarchiebene authentifiziert werden. In der Figur sind beispielhaft Zwischenzertifikate 202₁,...,202ₘ dargestellt, die mittels des Wurzelzertifikats 201 authentifizierbar sind. Darüber hinaus sind weitere Zwischenzertifikate 203₁,...,203ₙ dargestellt, die jeweils mittels eines der Zwischenzertifikate 202ᵢ authentifiziert werden. Und schließlich sind in der Figur Anbieterzertifikate 204₁,...,204p dargestellt, die jeweils mittels eines der Zwischenzertifikate 202₁,..., 202ₘ, 203₁,..., 203ₙ oder mittels des Wurzelzertifikats 201 authentifizierbar sind.

Üblicherweise enthält das mobile Endgerät 1 mehrere Wurzelzertifikate unterschiedlicher Zertifizierungsstellen, wobei in der Regel insbesondere der Hersteller des mobilen Endgeräts 101 und/oder der Betreiber des Telekommunikationsnetzes 102 als Zertifizierungsstellen auftreten, der im Folgenden kurz als Betreiber bezeichnet wird. Der Hersteller bringt ein Wurzelzertifikat vorzugsweise während der Herstellung in einen sicheren Bereich des Speichers 113 des mobilen Endgerätes 101 ein. Das Wurzelzertifikat des Betreibers wird üblicherweise in einem sicheren Bereich des Teilnehmeridentifikationsmoduls 109 gespeichert, bevor dieses an den Mobilfunknutzer ausgegeben wird. Die Zwischenzertifikate werden üblicherweise zu einem späteren Zeitpunkt durch den Hersteller, den Betreiber oder eine dritte Partei beispielsweise über das Netzwerk 102, 103, 104 an das mobile Endgerät 101 übermittelt. Der Einsatz von Zwischenzertifikaten zur Authentifizierung von Anbieterzertifikaten ist dabei gegenüber der Authentifizierung anhand des Wurzelzertifikats bevorzugt, da die Zwischenzertifikate leichter ausgetauscht werden können. Die Anbieterzertifikate werden üblicherweise zusammen mit den übermittelten Inhalten von dem Anbieterserver 3 an das mobile Endgerät gesendet.

Ein typischer Prozess zur Authentifizierung von Inhalten und der vorhergehenden Ausstellung des Anbieterzertifikats in dem PKI-System umfasst beispielsweise die folgenden Schritte:

Zunächst erzeugt ein Anbieter von Inhalten ein asymmetrisches Schlüsselpaar mit einem privaten Verschlüsselungsschlüssel und einem Prüfschlüssel oder erhält ein solches Paar von einer Zertifizierungsstelle. Ferner erhält der Anbieter von der Zertifizierungsstelle ein Anbieterzertifikat. Werden Inhalte durch das mobile Endgerät 101 von dem Anbieterserver 105 angefordert, so werden die Inhalte mit einer digitalen Signatur versehen, die mittels des privaten Verschlüsselungsschlüssels des Anbieters erzeugt wird. Die Inhalte werden dann zusammen mit der Signatur und dem Anbieterzertifikat und gegebenenfalls erforderlichen Zwischenzertifikaten an das mobile Endgerät 1 gesendet. Innerhalb des mobilen Endgeräts 1 wird dann zunächst das Anbieterzertifikat anhand eines vorhandenen Wurzelzertifikats und gegebenenfalls anhand vorhandener oder empfangener Zwischenzertifikate authentifiziert. Nach erfolgreicher Prüfung wird dann der in dem Anbieterzertifikat enthaltene Prüfschlüssel zur Prüfung der digitalen Signatur der Inhalte verwendet. Ein Zugriff auf Funktionen und Daten des mobilen Endgeräts 1 durch die in den Inhalten enthaltene Softwareapplikation wird erst nach erfolgreicher Prüfung dieser digitalen Signatur ermöglicht. Dabei können Zugriffsrechte beispielsweise auch in Abhängigkeit von dem zur Prüfung des Anbieterzertifikats herangezogenen Wurzelzertifikat oder der verwendeten Zwischenzertifikate gewährt werden. So kann etwa der Zugriff auf bestimmte Daten nur dann gewährt werden, wenn das Anbieterzertifikat mittels des Wurzelzertifikats oder eines bestimmten Zwischenzertifikats des Betreibers geprüft worden ist. Ein Zugriff auf andere Daten kann beispielsweise nur dann gewährt werden, wenn das Anbieterzertifikat mittels des Wurzelzertifikats des Herstellers des mobilen Endgeräts 101 geprüft worden ist.

Innerhalb des zuvor beschriebenen PKI-Systems können mobile Endgeräte 1 mehrere Wurzel- und Zwischenzertifikate enthalten. Mobile Endgeräte 1 unterschiedlicher Hersteller enthalten in der Regel zudem verschiedene Wurzel- und Zwischenzertifikate der Hersteller. Ferner enthalten die Teilnehmeridentifikationsmodule 109 verschiedener mobiler Endgeräte unterschiedliche Wurzel- und Zwischenzertifikate verschiedener Betreiber. Um authentifizierbare Inhalte an mobile Endgeräte 1 übermitteln zu können, die von verschiedenen Herstellern produziert worden sind und in Telekommunikationsnetzen 102 unterschiedlicher Betreiber genutzt werden, kann auch der Anbieter über verschiedene Anbieterzertifikate, die jeweils mittels eines der verwendeten Wurzel- oder Zwischenzertifikate authentifiziert werden können.

Im Rahmen der vorliegenden Erfindung ist es vorgesehen, dass das Verhalten des Anbieterservers 105 bei der Übermittlung von Inhalten an ein mobiles Endgerät 101 an die in dem mobilen Endgerät 101 enthaltenen digitalen Zertifikate angepasst wird. Hierzu sendet das mobile Endgerät 101 im Rahmen der Anforderung von Inhalten Informationen über die in dem Speicher 113 und in dem Teilnehmeridentifikationsmodul 109 gespeicherten digitalen Zertifikate an den Anbieterserver 105. Dabei werden zumindest Informationen über die in dem mobilen Endgerät 101 vorhandenen Wurzelzertifikate an den Anbieterserver 105 gesendet. Vorzugsweise werden zudem Informationen über die in dem mobilen Endgerät 101 verfügbaren Zwischenzertifikate übermittelt. Ferner können auch Anbieterzertifikate, die bei einer vorangegangenen Übermittlung von Inhalten in dem mobilen Endgerät 101 empfangen worden sind, in dem Speicher 113 oder in dem Teilnehmeridentifikationsmodul 109 gespeichert werden. Informationen über die gespeicherten Anbieterzertifikate werden vorzugsweise ebenfalls an den Anbieterserver 105 übermittelt.

In einer bevorzugten Ausführungsform werden die Informationen über die in dem mobilen Endgerät 101 verfügbaren digitalen Zertifikate im Rahmen des zuvor beschriebenen, nach dem HTTP vorgesehenen ersten Kommunikationsschritts übermittelt, in dem Art und Form der zu übermittelnden Inhalte zwischen dem mobilen Endgerät 101 und dem Anbieterserver 105 ausgehandelt werden. Insbesondere werden diese Informationen in einer standardisierten Form in den Kopfdatendatenbereich des HTTP-Request eingebracht. Dieser enthält dabei ein Headerfeld, in dem eine Liste der in dem mobilen Endgerät 101 verfügbaren digitalen Zertifikate enthalten ist. Eine mögliche Bezeichnung des Headerfeldes lautet "Accept-Certificates". Die in dem Headerfeld enthaltene Liste kann für jedes Zertifikat insbesondere einen Zertifikatsinhaber, eine Zertifikatsbezeichnung und ein Land angeben. Diese Parameter werden durch Parameterbezeichnungen markiert, wobei beispielsweise mit "C" das Land, mit "O" der Inhaber und mit "X509v3 Subject Key Identifier" der Name des Zertifikats bezeichnet sein kann. Ferner können die Parameter durch Schrägstriche getrennt sein und die verschiedenen Einträge der Liste durch Semikola. Die Liste kann somit beispielsweise die folgende Form haben:
48:DD:3D:EF:E0:3C:9C:DF:12:B1:30:FD:91:E1:C1:E9:FB:97:DC
:08 (Vodafone operator Domain);
47:E6:22:01:AA:BE:EB:CO:4F:2C:3E:A5:D1:47:2F:CE:59:1C:82
:FB (Vodafoen TTP Domain;
F1:5C:CO:OD:6A:71:37:A6:99:84:35:38:52:E2:53:73:67:71:D6
:30 (GeoTrust CA for UTI)

Wird diese Liste in den zuvor bereits beispielhaft angegebenen Request-Header eingefügt, hat dieser folgende Form:
GET / HTTP/1.1
**Host:** www.vodafone.com
**User-Agent:** Mozilla/5.0 (Windows; U; Windows NT 5.1)
Gecko/20060508 Firefox/1.5.04
**Accept:** text/xml,application/xml,application/xhtml+xml,
text/html; q=0.9, text/plain; q=0.8, image/png, */*;
q=0.5
**Accept-Language:** en-gb, en; q=0.5
**Accept-encoding:** gzip, deflate
**Accept-Charset:** ISO-8859-1, utf-8; q=0.7,*,q=0.7
**Accept-Certificates:**
48:DD:3D:EF:EO:3C:9C:DF:12:B1:30:FD:91:E1:C1:E9:FB:97:DC :08;47:E6:22:O1:AA:BE:EB:C0:4F:2C:3E:A5:D1:47:2F:CE:59:1 C:82:FB;F1:5C:CO:OD:6A:71:37:A6:99:84:35:38:52:E2:53_{:}73: 67:71:D6:30;
**Keep-Alive:** 300
**Proxy-Connection:** keep-alive

Nach dem Empfang des HTTP-Requests in dem Anbieterserver 105, werden insbesondere die Informationen über die in dem mobilen Endgerät 101 gespeicherten digitalen Zertifikate ausgewertet, um zu ermitteln, welche digitalen Zertifikate in dem mobilen Endgerät 101 zur Verfügung stehen. Aufgrund dieser Auswertung fügt der Server dann zu den an das mobile Endgerät 101 zu übermittelnden Inhalten die digitalen Zertifikate hinzu, die zur Prüfung des Authentifizierungsbestandteils der Inhalte benötigt werden und in dem mobilen Endgerät 101 nicht verfügbar sind.

Den Inhalten wird dabei insbesondere das Anbieterzertifikat hinzugefügt, falls dieses nicht bereits bei einer früheren Übermittlung von Inhalten an das mobile Endgerät 101 gesendet und in dem mobilen Endgerät 101 gespeichert worden ist. Falls das Anbieterzertifikat mithilfe eines oder mehrerer Zwischenzertifikate geprüft werden muss, die nicht in dem mobilen Endgerät 101 verfügbar sind, so werden den zu übermittelnden Inhalten ebenfalls die erforderlichen Zwischenzertifikate hinzugefügt.

Innerhalb des mobilen Endgeräts 101 wird der Authentifizierungsbestandteil nach dem Empfang der Inhalte gegebenenfalls mittels der zusammen mit den Inhalten erhaltenen digitalen Zertifikate geprüft. Ferner können die zusammen mit den Inhalten empfangenen digitalen Zertifikate für eine erneute zukünftige Verwendung gespeichert werden. Auf diese Weise verfügt das mobile Endgerät 101 bei einer folgenden Anforderung von Inhalten von demselben Anbieterserver 105 über alle notwendigen digitalen Zertifikate zur Authentifizierung der Inhalte.

Durch die Erfindung wird erreicht, dass in dem Anbieterserver 105 anhand einer Auswertung der von dem mobilen Endgerät 101 empfangenen Informationen genau die zur Authentifizierung der Inhalte benötigten digitalen Zertifikate ermittelt werden können, die in dem mobilen Endgerät nicht verfügbar sind. Diese Zertifikate kann der Anbieterserver 105 dann den Inhalten hinzufügen. Auf diese Weise werden lediglich die fehlenden digitalen Zertifikate mit den Inhalten übermittelt. Eine unnötige Übermittlung von bereits in dem mobilen Endgerät 101 verfügbaren Zertifikaten wird vermieden.

Falls aufgrund der Auswertung der von dem mobilen Endgerät 101 empfangenen Informationen in dem Anbieterserver festgestellt wird, dass fehlende digitale Zertifikate nicht innerhalb des Anbieterservers 105 zur Verfügung stehen und daher nicht zusammen mit den Inhalten an das mobile Endgerät 101 gesendet werden können, so generiert der Anbieterserver vorzugsweise eine Nachricht, mit einer Liste der betreffenden Zertifikate. Diese wird dann an das mobile Endgerät 101 gesendet. Auf diese Weise erhält der Nutzer des mobilen Endgeräts genaue Angaben darüber, welche digitalen Zertifikate zur Authentifizierung der Inhalte beschafft werden müssen. Die Nachricht kann dabei auch einen Hinweis darauf enthalten, wo die fehlenden digitalen Zertifikate bezogen werden können.

Ein fehlendes digitales Zertifikat kann von dem Anbieterserver 105 insbesondere dann nicht bereitgestellt werden, wenn es sich um ein Wurzelzertifikat handelt. In diesem Fall kann von dem Anbieterserver 101 eine Nachricht mit der Bezeichnung des fehlenden Wurzelzertifikats und dem Inhaber dieses Zertifikats gesendet werden. Anhand dieser Nachricht kann der Nutzer des mobilen Endgeräts sich dann an den Inhaber des Wurzelzertifikats wenden, um das Zertifikat zu erhalten. Handelt es sich beispielsweise um das Wurzelzertifikat des Betreibers, kann er das fehlende Wurzelzertifikat anhand der von dem Anbieterserver erhaltenden Nachricht in einer Filiale des Betreibers erhalten. In der Filiale kann das Wurzelzertifikat dabei anhand der Nachricht identifiziert werden und dann in einem gesicherten Prozess in einen gesicherten Bereich des Teilnehmeridentifikationsmoduls 109 eingebracht werden.

## Patentansprüche

1. Verfahren zum Übermitteln von Inhalten von einem Anbieterserver (105) zu einem mobilen Endgerät (101), wobei die Inhalte einen Authentifizierungsbestandteil umfassen, der innerhalb des Anbieterservers (105) mittels eines privaten Verschlüsselungsschlüssels verschlüsselt wird und mittels eines digitalen Zertifikats überprüfbar ist, um die übermittelten Inhalte zu authentifizieren,
**dadurch gekennzeichnet,**
**dass** in dem Anbieterserver (105) eine in einem ersten Kommunikationsschritt von dem mobilen Endgerät (101) gesendete Information über mehrere innerhalb des mobilen Endgeräts (101) gespeicherte digitale Zertifikate zur Prüfung von Daten, die mit einem zugehörigen Verschlüsselungsschlüssel verschlüsselt sind, empfangen wird, dass die Information innerhalb des Anbieterservers (105) ausgewertet wird, so dass der Anbieterserver (105) Kenntnis über mehrere in dem mobilen Endgerät (101) verfügbaren digitalen Zertifikate erlangt, und dass der Anbieterserver (105) die Inhalte in einem zweiten Kommunikationsschritt in Abhängigkeit von einem Ergebnis der Auswertung der erhaltenen Informationen an das mobile Endgerät (101) übermittelt.

2. Verfahren nach Anspruch 1,
**dadurch gekennzeichnet,**
**dass** in dem Anbieterserver (105) eine im ersten Kommunikationsschritt von dem mobilen Endgerät (101) gesendete Nachricht empfangen wird, welche die Informationen über die innerhalb des mobilen Endgeräts (101) gespeicherten digitalen Zertifikate in einem Standardformat enthält.

3. Verfahren nach Anspruch 1 oder 2,
**dadurch gekennzeichnet,**
**dass** der erste Kommunikationsschritt auf dem Hypertext Transfer Protocol basiert, wobei in dem ersten Kommunikationsschritt ein von dem mobilen Endgerät gesendeter HTTP-Request in dem Anbieterserver (105) empfangen wird und wobei die Information über die innerhalb des mobilen Endgeräts (101) gespeicherten digitalen Zertifikate Bestandteil eines Kopfdatenbereichs des HTTP-Requests ist.

4. Verfahren nach einem der vorangegangenen Ansprüche,
**dadurch gekennzeichnet,**
**dass** aufgrund der Auswertung der Information über die innerhalb des mobilen Endgeräts (101) gespeicherten digitalen Zertifikate innerhalb des Anbieterservers (105) ermittelt wird, für welche der in dem Anbieterserver (105) verfügbare Verschlüsselungsschlüssel in dem mobilen Endgerät (101) ein zugeordnetes Zertifikat gespeichert ist.

5. Verfahren nach einem der vorangegangenen Ansprüche,
**dadurch gekennzeichnet,**
**dass** in dem Anbieterserver (105) ein Verschlüsselungsschlüssel ausgewählt wird, für den in dem mobilen Endgerät ein zugeordnetes digitales Zertifikat gespeichert ist, und dass der Authentifizierungsbestandteil der Inhalte mit dem ausgewählten Verschlüsselungsschlüssel verschlüsselt wird.

6. Verfahren nach einem der vorangegangenen Ansprüche,
**dadurch gekennzeichnet,**
**dass** der Authentifizierungsbestandteil der Inhalte in dem Anbieterserver (105) mittels eines Verschlüsselungsschlüssels verschlüsselt wird, dem ein digitales Anbieterzertifikat zugeordnet ist, wobei das digitale Anbieterzertifikat von dem Anbieterserver (105) an das mobile Endgerät (101) übermittelt wird.

7. Verfahren nach Anspruch 6,
**dadurch gekennzeichnet,**
**dass** das digitale Anbieterzertifikat mittels eines in dem mobilen Endgerät (101) gespeicherten digitalen Zertifikats authentifizierbar ist.

8. Verfahren nach Anspruch 6 oder 7,
**dadurch gekennzeichnet,**
**dass** von dem Anbieterserver (105) ein digitales Zwischenzertifikat an das mobile Endgerät (101) übermittelt wird, wobei das digitale Zwischenzertifikat zur Prüfung des Anbieterzertifikats herangezogen werden kann, und wobei das digitale Zwischenzertifikat mittels eines in dem mobilen Endgerät gespeicherten digitalen Zertifikats geprüft werden kann.

9. Verfahren nach einem der vorangegangenen Ansprüche,
**dadurch gekennzeichnet,**
**dass** es sich bei wenigstens einem in dem mobilen Endgerät (101) gespeicherten digitalen Zertifikat um ein digitales Wurzelzertifikat handelt.

10. Verfahren nach Anspruch 9,
**dadurch gekennzeichnet,**
**dass** das digitale Wurzelzertifikat in einem Teilnehmeridentifikationsmodul gespeichert ist, das in dem mobilen Endgerät enthalten ist.

11. Verfahren nach Anspruch 9 oder 10,
**dadurch gekennzeichnet,**
**dass** das mobile Endgerät (101) wenigstens ein weiters digitales Zertifikat enthält, bei dem es sich um ein Zwischenzertifikat handelt, das mittels des Wurzelzertifikats authentifizierbar ist.

12. Verfahren nach einem der vorangegangenen Ansprüche,
**dadurch gekennzeichnet,**
**dass** die Inhalte einen Programmcode enthalten, der innerhalb des mobilen Endgeräts (101) ausführbar ist, nachdem die übermittelten Inhalte innerhalb des mobilen Endgeräts (101) authentifiziert worden sind.

13. Computerprogrammprodukt,
**dadurch gekennzeichnet,**
**dass** es ein Computerprogramm zur Ausführung eines Verfahrens nach einem der vorangegangenen Ansprüche, wenn es von einem Computer ausgeführt wird, enthält.

14. Mobiles Endgerät (101) zum Empfangen von Inhalten von einem Anbieterserver (105), wobei die Inhalte einen Authentifizierungsbestandteil umfassen, der mittels eines privaten Verschlüsselungsschlüssels des Anbieterservers (105) verschlüsselt ist, und wobei der Authentifizierungsbestandteil innerhalb des mobilen Endgeräts (101) mittels eines dem Verschlüsselungsschlüssel zugeordneten digitalen Zertifikats authentifizierbar ist,
**dadurch gekennzeichnet,**
**dass** das mobile Endgerät (101) dazu ausgebildet ist, in einem Kommunikationsschritt eine Information über mehrere innerhalb des Endgeräts (101) gespeicherte digitale Zertifikate zur Prüfung von Daten, die mit einem zugehörigen Verschlüsselungsschlüssel verschlüsselt sind, an den Anbieterserver (105) zu übermitteln, so dass der Anbieterserver (105) Kenntnis über mehrere in dem mobilen Endgerät (101) verfügbaren digitalen Zertifikate erlangen kann.

15. Anbieterserver (105) zum Übermitteln von Inhalten an ein mobiles Endgerät (101), wobei die Inhalte einen Authentifizierungsbestandteil umfassen, der innerhalb des Anbieterservers (105) mittels eines privaten Verschlüsselungsschlüssels verschlüsselbar ist, und wobei der Authentifizierungsbestandteil innerhalb des mobilen Endgeräts (101) mittels eines digitalen Zertifikats authentifizierbar ist,
**dadurch gekennzeichnet,**
**dass** der Anbieterserver (105) dazu ausgebildet ist, eine in einem Kommunikationsschritt von dem mobilen Endgerät (101) gesendete Information über mehrere innerhalb des mobilen Endgeräts (101) gespeicherte digitale Zertifikate zur Prüfung von Daten, die mit einem zugehörigen Verschlüsselungsschlüssel verschlüsselt sind, zu empfangen und auszuwerten, so dass der Anbieterserver (105) Kenntnis über mehrere in dem mobilen Endgerät (101) verfügbaren digitalen Zertifikate erlangt.

16. Kommunikationssystem, in dem wenigstens ein mobiles Endgerät (101) mit wenigstens einem Anbieterserver (105) verbindbar ist,
**dadurch gekennzeichnet,**
**dass** das Kommunikationssystem wenigstens ein mobiles Endgerät (101) nach Anspruch 14 sowie wenigstens einen Anbieterserver (105) nach Anspruch 15 umfasst.

## Claims

1. A method for transmitting contents from a provider server (105) to a mobile terminal device (101), whereby the contents comprise an authentication component that is encrypted in the provider server (105) by means of a private encryption key and that can be checked by means of a digital certificate in order to authenticate the transmitted contents,
**characterized in that**,
in the provider server (105), information is received about several digital certificates that are stored in the mobile terminal device (101) and that are used for checking data that is encrypted with an associated encryption key, **in that** the information is evaluated in the provider server (105), so that the provider server (105) acquires knowledge about several digital certificates that are available in the mobile terminal device (101), and **in that** the provider server (105) transmits the contents to the mobile terminal device (101) in a second communication step as a function of the result of the evaluation of the received information.

2. The method according to claim 1,
**characterized in that**
a message sent by the mobile terminal device (101) is received in the provider server (105) in the first communication step, said message containing the information about the digital certificates stored in a standard format in the mobile terminal device (101).

3. The method according to claim 1 or 2,
**characterized in that**
the first communication step is based on the Hypertext Transfer Protocol, whereby in the first communication step, an HTTP request sent by the mobile terminal device is received in the provider server (105), and whereby the information about the digital certificates stored in the mobile terminal device (101) is a component of a header range of the HTTP request.

4. The method according to one of the preceding claims,
**characterized in that**,
on the basis of the evaluation of the information about the digital certificates stored in the mobile terminal device (101), it is ascertained in the provider server (105) for which of the encryption keys available in the provider server (105) an associated certificate is stored in the mobile terminal device (101).

5. The method according to one of the preceding claims,
**characterized in that**,
in the provider server (105), an encryption key is selected for which an associated digital certificate is stored in the mobile terminal device, and **in that** the authentication component of the contents is encrypted with the selected encryption key.

6. The method according to one of the preceding claims,
**characterized in that**
the authentication component of the contents is encrypted in the provider server (105) by means of an encryption key that is associated with a digital provider certificate, whereby the digital provider certificate is transmitted by the provider server (105) to the mobile terminal device (101).

7. The method according to claim 6,
**characterized in that**
the digital provider certificate can be authenticated by means of a digital certificate stored in the mobile terminal device (101).

8. The method according to claim 6 or 7,
**characterized in that**
a digital intermediate certificate is transmitted to the mobile terminal device (101) by the provider server (105), whereby the digital intermediate certificate can be used to check the provider certificate, and whereby the digital intermediate certificate can be checked by means of a digital certificate that is stored in the mobile terminal device.

9. The method according to one of the preceding claims,
**characterized in that**
at least one digital certificate that is stored in the mobile terminal device (101) is a digital root certificate.

10. The method according to claim 9,
**characterized in that**
the digital root certificate is stored in a subscriber identification module that is contained in the mobile terminal device.

11. The method according to claim 9 or 10,
**characterized in that**
the mobile terminal device (101) has at least one additional digital certificate which is an intermediate certificate that can be authenticated by means of the root certificate.

12. The method according to one of the preceding claims,
**characterized in that**
the contents comprise a program code that can be run in the mobile terminal device (101) after the transmitted contents have been authenticated in the mobile terminal device (101).

13. A computer program product,
**characterized in that**
it comprises a computer program for executing a method according to one of the preceding claims when it is executed by a computer.

14. A mobile terminal device (101) for receiving contents from a provider server (105), whereby the contents comprise an authentication component that is encrypted by means of a private encryption key of the provider server (105), and whereby the authentication component can be authenticated in the mobile terminal device (101) by means of a digital certificate associated with the encryption key,
**characterized in that**
the mobile terminal device (101) is configured such that, in a communication step, it can transmit information to the provider server (105) about several digital certificates that are stored in the mobile terminal device (101) and that are used for checking data that is encrypted with an associated encryption key, so that the provider server (105) can acquire knowledge about several digital certificates that are available in the mobile terminal device (105).

15. A provider server (105) for transmitting contents to a mobile terminal device (101), whereby the contents comprise an authentication component that can be encrypted in the provider server (105) by means of a private encryption key, and whereby the authentication component can be authenticated in the terminal device (101) by means of a digital certificate,
**characterized in that**
the provider server (105) is configured such that, in a communication step, it can receive and evaluate information that was sent by the mobile terminal device (101) about several digital certificates stored in the mobile terminal device (101) for checking data that is encrypted with an associated encryption key, so that the provider server (105) acquires knowledge about several digital certificates that are available in the mobile terminal device (101).

16. A communication system, in which at least one mobile terminal device (101) can be connected to at least one provider server (105),
**characterized in that**
the communication system comprises at least one mobile terminal device (101) according to claim 14 as well as at least one provider server (105) according to claim 15.

## Revendications

1. Procédé de transmission de contenus d'un serveur de fournisseur (105) vers un terminal mobile (101), les contenus comprenant un composant d'authentification qui est crypté au sein du serveur de fournisseur (105) au moyen d'une clé de cryptage privée et qui peut être vérifié au moyen d'un certificat numérique afin d'authentifier les contenus transmis, **caractérisé en ce qu'**est reçue, dans le serveur de fournisseur (105), une information émise par le terminal mobile (101) dans une première étape de communication, concernant plusieurs certificats numériques stockés au sein du terminal mobile (101) et destinée au contrôle des données qui sont cryptées au moyen d'une clé de cryptage associée, **en ce que** l'information est évaluée au sein du serveur de fournisseur (105), de sorte que le serveur de fournisseur (105) prend connaissance de plusieurs certificats numériques disponibles dans le terminal mobile (101) et **en ce que** le serveur de fournisseur (105), dans une deuxième étape de communication, transmet les contenus au terminal mobile (101) en fonction d'un résultat de l'évaluation des informations obtenues.

2. Procédé selon la revendication 1, **caractérisé en ce qu'**est reçu, dans le serveur de fournisseur (105), un message émis par le terminal mobile (101) dans la première étape de communication et qui contient, dans un format standard, les informations sur les certificats numériques stockés au sein du terminal mobile (101).

3. Procédé selon la revendication 1 ou 2, **caractérisé en ce que** la première étape de communication est basée sur l'Hypertext Transfer Protocol, une requête HTTP émise par le terminal mobile étant, dans la première étape de communication, reçue dans le serveur de fournisseur (105) et l'information sur les certificats numériques stockés au sein du terminal mobile (101) faisant partie d'une zone de données d'en-tête de la requête HTTP.

4. Procédé selon l'une des revendications précédentes, **caractérisé en ce qu'**il est déterminé, au sein du serveur de fournisseur (105) et sur la base de l'évaluation de l'information sur les certificats numériques stockés au sein du terminal mobile (101), pour lesquelles des clés de cryptage disponibles dans le serveur de fournisseur (105) un certificat associé est stocké dans le terminal mobile (101).

5. Procédé selon l'une des revendications précédentes, **caractérisé en ce qu'**est sélectionnée, dans le serveur de fournisseur (105), une clé de cryptage pour laquelle un certificat numérique associé est stocké dans le terminal mobile et **en ce que** le composant d'authentification des contenus est crypté avec la clé de cryptage sélectionnée.

6. Procédé selon l'une des revendications précédentes, **caractérisé en ce que** le composant d'authentification des contenus est crypté dans le serveur de fournisseur (105) au moyen d'une clé de cryptage à laquelle est associé un certificat de fournisseur numérique, le certificat de fournisseur numérique étant transmis par le serveur de fournisseur (105) au terminal mobile (101).

7. Procédé selon la revendication 6, **caractérisé en ce que** le certificat de fournisseur numérique peut être authentifié au moyen d'un certificat numérique stocké dans le terminal mobile (101).

8. Procédé selon la revendication 6 ou 7, **caractérisé en ce qu'**un certificat intermédiaire numérique est transmis par le serveur de fournisseur (105) au terminal mobile (101), le certificat intermédiaire numérique pouvant être utilisé pour contrôler le certificat de fournisseur, et le certificat intermédiaire numérique pouvant être contrôlé au moyen d'un certificat numérique stocké dans le terminal mobile.

9. Procédé selon l'une des revendications précédentes, **caractérisé en ce qu'**au moins un certificat numérique stocké dans le terminal mobile (101) est un certificat racine numérique.

10. Procédé selon la revendication 9, **caractérisé en ce que** le certificat racine numérique est stocké dans un module d'identification d'abonné qui est contenu dans le terminal mobile.

11. Procédé selon la revendication 9 ou 10, **caractérisé en ce que** le terminal mobile (101) contient au moins un autre certificat numérique qui est un certificat intermédiaire qui peut être authentifié au moyen du certificat racine.

12. Procédé selon l'une des revendications précédentes, **caractérisé en ce que** les contenus contiennent un code de programme qui peut être exécuté au sein du terminal mobile (101) après que les contenus transmis ont été authentifiés au sein du terminal mobile (101).

13. Produit de programme informatique, **caractérisé en ce qu'**il contient un programme informatique pour exécuter un procédé selon l'une des revendications précédentes lorsqu'il est exécuté par un ordinateur.

14. Terminal mobile (101) destiné à recevoir des contenus d'un serveur de fournisseur (105), les contenus comprenant un composant d'authentification qui est crypté au moyen d'une clé de cryptage privée du serveur de fournisseur (105), et le composant d'authentification pouvant être authentifié au sein du terminal mobile (101) au moyen d'un certificat numérique associé à la clé de cryptage, **caractérisé en ce que** le terminal mobile (101) est conçu pour transmettre au serveur de fournisseur (105), dans une étape de communication, une information concernant plusieurs certificats numériques stockés au sein du terminal (101) et destinée au contrôle de données qui sont cryptées avec une clé de cryptage associée, de sorte que le serveur de fournisseur (105) peut prendre connaissance de plusieurs certificats numériques disponibles dans le terminal mobile (101).

15. Serveur de fournisseur (105) destiné à transmettre des contenus à un terminal mobile (101), les contenus comprenant un composant d'authentification qui peut être crypté au sein du serveur de fournisseur (105) au moyen d'une clé de cryptage privée, et le composant d'authentification pouvant être authentifié au sein du terminal mobile (101) au moyen d'un certificat numérique, **caractérisé en ce que** le serveur de fournisseur (105) est conçu pour recevoir, dans une étape de communication, une information émise par le terminal mobile (101), concernant plusieurs certificats numériques stockés au sein du terminal (101) et destinée au contrôle de données qui sont cryptées avec une clé de cryptage associée, et pour l'évaluer, de sorte que le serveur de fournisseur (105) prend connaissance de plusieurs certificats numériques disponibles dans le terminal mobile (101).

16. Système de communication dans lequel au moins un terminal mobile (101) peut être relié à au moins un serveur de fournisseur (105), **caractérisé en ce que** le système de communication comprend au moins un terminal mobile (101) selon la revendication 14 ainsi qu'au moins un serveur de fournisseur (105) selon la revendication 15.
